# EUROPÄISCHE PATENTSCHRIFT

(11) **EP 3 455 119 B1**
(45) Veröffentlichungstag und Bekanntmachung des Hinweises auf die Patenterteilung: **19.02.2020**
(21) Anmeldenummer: 17730090.2
(22) Anmeldetag: 06.06.2017
(51) Int. Cl.: B61F 15/20

(54) **DREHGESTELL FÜR EIN SCHIENENFAHRZEUG**
BOGIE FOR A RAIL VEHICLE
BOGGIE POUR VÉHICULE FERROVIAIRE

(30) Priorität: 15.07.2016 DE 102016212938
(43) Veröffentlichungstag der Anmeldung: 20.03.2019
(73) Patentinhaber: Siemens Mobility GmbH, 81739 München (DE)
(72) Erfinder: WENNEKAMP, Fabian, 45131 Essen (DE)
(86) Internationale Anmeldenummer: PCT/EP2017/063643
(87) Internationale Veröffentlichungsnummer: WO 2018/010892

(56) Entgegenhaltungen:
- EP-A1- 3 023 658

## Beschreibung

Die Erfindung betrifft ein Drehgestell für ein Schienenfahrzeug, aufweisend einen Radsatz mit einem Radsatzlager.

Ein Radsatzlager eines Drehgestells kann sich während einer Fahrt eines Schienenfahrzeugs unter Umständen stark erwärmen. In Fachkreisen wird eine unzulässig starke Erwärmung eines Radsatzlagers als Heißläufer bezeichnet. Da ein Heißläufer als betriebsgefährlicher Schaden eingestuft wird, wird ein Schienenfahrzeug, bei welchem ein Heißläufer festgestellt wurde, üblicherweise außer Betrieb genommen.

Es gibt unterschiedliche Ursachen für das Auftreten eines Heißläufers. Beispielsweise kann ein Austritt von Schmierstoff aus dem Radsatzlager, welcher zu einer Erhöhung der Reibung im Radsatzlager führt, einen Heißläufer verursachen. Umgekehrt kann ein Austritt von Schmierstoff aus dem Radsatzlager, z.B. durch Verdampfung des Schmierstoffs, auf einen bereits vorhandenen Heißläufer hindeuten.

Im Extremfall kann es bei Auftreten eines Heißläufers zu einem Bruch einer Radsatzwelle und infolgedessen zu einer Entgleisung des Schienenfahrzeugs kommen.

Eine Aufgabe der Erfindung ist es, eine aufwandsgünstige Prüfung einer Radsatzlager-Temperatur zu ermöglichen. Eine Anordnung, die dies ermöglicht ist zum Beispiel durch die EP 3 023 658 A1 bekannt, welche einen innengelagerten Radsatz und ein am Radsatzlager angeordnetes Temperaturfühlelement aufweist.

Diese Aufgabe wird gelöst durch ein Drehgestell der eingangs genannten Art, welches erfindungsgemäß ein Temperaturprüfelement und eine wärmeleitende Leitung, durch welche das Radsatzlager mit dem Temperaturprüfelement thermisch verbunden ist, aufweist.

Die Erfindung geht von der Überlegung aus, dass Temperaturen von Radsatzlagern grundsätzlich mittels fahrzeugseitigen und/oder streckenseitigen Überwachungssystemen überwacht werden können. Da solche Überwachungssysteme fehlerhaft sein können, ist es von Vorteil, wenn eine Heißläufer-Meldung eines solchen Überwachungssystems nach Anhalten des Schienenfahrzeugs manuell, z.B. durch einen Fahrzeugführer, plausibilisiert werden kann.

Durch die wärmeleitende Leitung sind das Radsatzlager und das Temperaturprüfelement derart miteinander verbunden, dass Wärme von einem dieser beiden Elemente zu dem anderen der beiden Elemente übertragen wird. Typischerweise wird die Wärme vom Radsatzlager zum Temperaturprüfelement übertragen, da sich das Radsatzlager während einer Fahrt des Schienenfahrzeugs aufheizt. Zweckmäßigerweise stellt die wärmeleitende Leitung ein thermisches Gleichgewicht zwischen dem Radsatzlager und dem Temperaturprüfelement her, sodass das Radsatzlager und das Temperaturprüfelement gleiche Temperaturen aufweisen.

Das Temperaturprüfelement kann an einer gut zugänglichen Stelle platziert werden, sodass - durch eine Prüfung einer Temperatur des Temperaturprüfelements - eine Temperatur des Radsatzlagers von einer gut zugänglichen Stelle geprüft werden kann. Folglich kann die Prüfung der Radsatzlager-Temperatur aufwandsgünstig realisiert werden.

Im Falle eines innengelagerten Drehgestells ist es insbesondere nicht erforderlich, dass sich ein Fahrzeugführer oder eine andere Person unter das Drehgestell legen muss, um die Temperatur des Radsatzlagers, das bei einem innengelagerten Drehgestell normalerweise durch eine Radscheibe des Radsatzes verdeckt ist, mittels eines Thermometers messen zu können.

Ferner kann das Temperaturprüfelement für eine automatisierte Kontrolle der Temperatur des Radsatzlagers genutzt werden.

Als Temperaturprüfelement kann ein Element aufgefasst werden, welches - gegebenenfalls in Zusammenwirkung mit anderen Elementen - dazu dient, durch eine Prüfung seiner Temperatur eine Temperatur des Radsatzlagers zu prüfen.

Das Prüfen einer Temperatur kann ein Ermitteln der Temperatur und/oder ein Feststellen, ob die Temperatur einen vorgegebenen Temperaturschwellwert überschritten hat, umfassen.

Die wärmeleitende Leitung weist zweckmäßigerweise ein wärmeleitendes Material auf. Bei dem wärmeleitenden Material kann es sich beispielsweise um einen Reinstoff oder ein Stoffgemisch, insbesondere eine Metall-Legierung, handeln.

Vorliegend kann ein Bauteil oder ein Material als wärmeleitend aufgefasst werden, wenn es eine Wärmeleitfähigkeit von mindestens 10 W/(m·K) aufweist. Vorzugsweise hat die wärmeleitende Leitung eine Wärmeleitfähigkeit von mindestens 50 W/(m·K), besonders bevorzugt von mindestens 200 W/(m·K).

Die wärmeleitende Leitung kann einen Festkörper, insbesondere einen metallischen Festkörper, oder ein Fluid als wärmeleitendes Material aufweisen. Zum Beispiel kann als wärmeleitendes Material Kupfer, Aluminium und/oder Silber vorgesehen sein.

Vorteilhafterweise ist die wärmeleitende Leitung zumindest abschnittweise thermisch isoliert. Mit anderen Worten, die wärmeleitende Leitung ist vorteilhafterweise zumindest abschnittweise von einem thermisch isolierenden Material umgeben. Auf diese Weise können Wärmeverluste an die Umgebung der wärmeleitenden Leitung vermieden oder zumindest reduziert werden.

Weiterhin ist es vorteilhaft, wenn die wärmeleitende Leitung an einem Rahmen des Drehgestells befestigt ist. Vorzugsweise ist die wärmeleitende Leitung gegenüber dem Rahmen des Drehgestells isoliert. Besonders bevorzugt ist es, wenn die wärmeleitende Leitung zwischen dem Temperaturprüfelement und dem Radsatzlager von einem thermisch isolierenden Material umgeben ist.

Ferner ist es vorteilhaft, wenn das Temperaturprüfelement zumindest abschnittsweise gegenüber dem Rahmen des Drehgestells thermisch isoliert ist.

Zweckmäßigerweise umfasst der Radsatz zwei Radscheiben. In bevorzugter Weise ist das besagte Radsatzlager des Drehgestells zwischen den beiden Radscheiben angeordnet. Bei dem Drehgestell handelt es sich also vorzugsweise um ein innengelagertes Drehgestell, auch Drehgestell mit Innenlagerung genannt.

Alternativ kann das Drehgestell als außengelagertes Drehgestell, auch Drehgestell mit Außenlagerung genannt, ausgeführt sein.

In einer vorteilhaften Ausführungsform der Erfindung ist das Temperaturprüfelement als wärmeleitender Körper ausgebildet oder umfasst das Temperaturprüfelement einen wärmeleitenden Körper. Zweckmäßigerweise ist der wärmeleitende Körper ein metallischer Körper. Der wärmeleitende Körper kann beispielsweise als Platte ausgebildet sein. Vorzugsweise hat der wärmeleitende Körper eine Wärmeleitfähigkeit von mindestens 50 W/(m·K), besonders bevorzugt von mindestens 200 W/(m·K).

Weiter ist es bevorzugt, wenn der wärmeleitende Körper eine wärmeleitende Messfläche, insbesondere für eine Temperaturmessung mittels eines Thermometers, umfasst. Des Weiteren kann der wärmeleitende Körper am Drehgestellrahmen befestigt sein.

Bei einer vorteilhaften Weiterbildung der Erfindung ist vorgesehen, dass das Temperaturprüfelement ein Indikationsmittel, insbesondere ein optisches Indikationsmittel, umfasst. Das Indikationsmittel ist zweckmäßigerweise dazu eingerichtet, zu signalisieren, ob eine Temperatur des Temperaturprüfelements einen vorgegebenen Temperaturschwellwert überschritten hat. Da das Temperaturprüfelement und das Radsatzlager in thermischem Kontakt miteinander sind, kann anhand dieser Information ermittelt werden, ob die Temperatur des Radsatzlagers den vorgegebenen Temperaturschwellwert überschritten hat.

Als Indikationsmittel kann z.B. ein Thermolack vorgesehen sein, der dazu eingerichtet ist, sich zu verfärben, wenn die Temperatur des Temperaturprüfelements den vorgegebenen Temperaturschwellwert überschreitet.

Grundsätzlich ist es möglich, dass sich der Thermolack reversibel verfärbt, wenn die Temperatur des Temperaturprüfelements den vorgegebenen Temperaturschwellwert überschreitet.

Besonders bevorzugt ist es, wenn sich der Thermolack irreversibel verfärbt, wenn die Temperatur des Temperaturprüfelements den vorgegebenen Temperaturschwellwert überschreitet. Mit anderen Worten, in bevorzugter Weise behält der Thermolack seine nach Überschreitung des Temperaturschwellwerts angenommene Farbe bei, auch wenn die Temperatur des Temperaturprüfelements nach der Überschreitung des Temperaturschwellwerts diesen wieder unterschreitet.

Weiterhin kann als Indikationsmittel mindestens eine Farbkapsel vorgesehen sein, welche dazu eingerichtet ist, aufzuplatzen, wenn die Temperatur des Temperaturprüfelements den vorgegebenen Temperaturschwellwert überschreitet. Die Farbkapsel kann beispielweise mit einer Flüssigkeit und/oder mit Pulver gefüllt sein. Durch ein Aufplatzen der Kapsel kann der zuvor erwähnte wärmeleitende Körper, insbesondere dessen Messfläche, zumindest abschnittweise verfärbt werden.

Des Weiteren kann als Indikationsmittel eine Leuchtvorrichtung vorgesehen sein, welche dazu eingerichtet ist, aufzuleuchten, wenn die Temperatur des Temperaturprüfelements den vorgegebenen Temperaturschwellwert überschreitet. Vorzugsweise bleibt die Leuchtvorrichtung leuchten, nachdem der Temperaturschwellwert überschritten wurde und gegebenenfalls wieder unterschritten wurde.

Als Indikationsmittel kann ferner eine Anzeigevorrichtung vorgesehen sein, welche einen Bimetall-Körper umfasst und dazu eingerichtet ist, anhand einer temperaturbedingten Verformung des Bimetall-Körpers anzuzeigen, ob die Temperatur des Temperaturprüfelements den vorgegebenen Temperaturschwellwert überschritten hat.

Prinzipiell kann das Temperaturprüfelement mehrere Indikationsmittel, insbesondere eine Kombination der zuvor erwähnten Ausführungen von Indikationsmitteln, umfassen.

In einer bevorzugten Ausführungsform der Erfindung weist das Drehgestell einen weiteren Radsatz auf. Zweckmäßigerweise ist das Temperaturprüfelement zwischen einer ersten Ebene, die senkrecht zu einer Längsrichtung des Drehgestells durch den erstgenannten Radsatz verläuft, und einer zweiten Ebene, die senkrecht zu der Längsrichtung des Drehgestells durch den weiteren Radsatz verläuft, angeordnet.

Vorzugsweise umfasst das Drehgestell ein weiteres Temperaturprüfelement. Ferner ist es vorteilhaft, wenn das Drehgestell eine weitere wärmeleitende Leitung aufweist, durch welche ein weiteres Radsatzlager des Radsatzes mit dem weiteren Temperaturprüfelement thermisch verbunden ist.

Das erstgenannte Temperaturprüfelement und das weitere Temperaturprüfelement können z.B. an einander gegenüberliegenden Seiten des Drehgestells positioniert sein.

Es kann vorgesehen sein, dass das Drehgestell ein zusätzliches Temperaturprüfelement sowie eine zusätzliche wärmeleitende Leitung aufweist, durch welche ein zusätzliches Radsatzlager des Radsatzes mit dem zusätzlichen Temperaturprüfelement thermisch verbunden ist.

Das erstgenannte Temperaturprüfelement und das zusätzliche Temperaturprüfelement können beispielsweise an derselben Seite des Drehgestells positioniert sein.

Das Drehgestell kann insbesondere ein sogenanntes verkleidetes Drehgestell sein. Das heißt, das Drehgestell kann eine Verkleidung aufweisen, welche seinen Drehgestellrahmen und den Radsatz zumindest teilweise umgibt. In solch einem Fall ist das Temperaturprüfelement vorteilhafterweise an einer Außenseite der Verkleidung angeordnet. Dies ermöglicht eine gute Zugänglichkeit zum Temperaturprüfelement.

Als Außenseite der Verkleidung kann vorliegend die dem Drehgestellrahmen abgewandte Seite der Verkleidung aufgefasst werden. Die Verkleidung des Drehgestells kann beispielsweise dazu dienen, den Luftwiderstand des Drehgestells zu verringern.

In einer bevorzugten Ausführungsform der Erfindung weist das Drehgestell für jedes seiner Radsatzlager ein eigenes Temperaturprüfelement auf. Weiterhin ist es bevorzugt, wenn das Drehgestell für jedes seiner Radsatzlager eine eigene wärmeleitende Leitung aufweist. Zweckmäßigerweise ist durch die jeweilige wärmeleitende Leitung genau eins der Radsatzlager mit genau einem der Temperaturprüfelemente thermisch verbunden.

Die Temperaturprüfelemente können z.B. alle an derselben Seite des Drehgestells positioniert sein. Alternativ können einige der Temperaturprüfelemente an einer ersten Seite des Drehgestells positioniert sein, während die übrigen Temperaturprüfelemente an einer der ersten Seite gegenüberliegenden zweiten Seite des Drehgestells positioniert sein können.

In einer vorteilhaften Weiterbildung der Erfindung weist das Temperaturprüfelement einen Abschnitt auf, der einen größeren Abstand zu einer Längs-Mittelebene des Drehgestells aufweist als eine Radscheibe des Radsatzes. Dadurch kann erreicht werden, dass eine streckenseitige Heißläuferortungsanlage zur Prüfung der Temperatur des Temperaturprüfelements eingesetzt werden kann.

Als Längs-Mittelebene des Drehgestells kann vorliegend eine Ebene aufgefasst werden, welche parallel zur Längsrichtung des Drehgestells durch dessen Mittelpunkt verläuft. Zweckmäßigerweise ist die Längs-Mittelebene des Drehgestells senkrecht zu einer Radsatzwelle des Radsatzes ausgerichtet.

Des Weiteren ist die Erfindung auf ein Schienenfahrzeug gerichtet, welches mindestens ein Drehgestell gemäß der obigen Beschreibung aufweist.

Ferner betrifft die Erfindung ein Verfahren zum Prüfen einer Radsatzlager-Temperatur eines Schienenfahrzeugs.

Das erfindungsgemäße Verfahren sieht vor, dass das Schienenfahrzeug ein Drehgestell mit einem Radsatz, einer wärmeleitenden Leitung und einem Temperaturprüfelement aufweist, ein Radsatzlager des Radsatzes durch die wärmeleitende Leitung mit dem Temperaturprüfelement thermisch verbunden ist, über die wärmeleitende Leitung Wärme von dem Radsatzlager an das Temperaturprüfelement geleitet wird und eine Temperatur des Temperaturprüfelements geprüft wird.

Die Radsatzlager-Temperatur wiederum kann anhand der Temperatur des Temperaturprüfelements, welche vorteilhafterweise der Radsatzlager-Temperatur entspricht, geprüft werden.

Das im Zusammenhang mit dem Verfahren genannte Drehgestell ist zweckmäßigerweise das erfindungsgemäße Drehgestell, insbesondere eine der oben beschriebenen vorteilhaften Weiterbildungen des erfindungsgemäßen Drehgestells.

Eine vorteilhafte Weiterbildung der Erfindung sieht vor, dass von einem Indikationsmittel, insbesondere einem optischen Indikationsmittel, des Temperaturprüfelements signalisiert wird, ob die Temperatur des Temperaturprüfelements einen vorgegebenen Temperaturschwellwert überschritten hat.

Während eines Stillstands des Schienenfahrzeugs kann die Temperatur des Temperaturprüfelements mithilfe eines Thermometers ermittelt werden.

Beispielsweise kann das Thermometer an eine wärmeleitende Messfläche, insbesondere an eine metallische Messfläche, des Temperaturprüfelements gehalten werden, um die Temperatur des Temperaturprüfelements zu ermitteln.

Falls das Thermometer ein berührungslos messendes Thermometer ist, kann mittels des Thermometers die von der Messfläche des Temperaturprüfelements emittierte Wärmestrahlung erfasst werden. Anhand der erfassten Wärmestrahlung kann vom Thermometer die Temperatur des Temperaturprüfelements ermittelt werden.

Bei bisher bekannten Drehgestellen ist die Prüfung der Radsatzlager-Temperatur mithilfe von streckenseitig montierten Heißläuferortungsanlagen nur bei außengelagerten Drehgestellen möglich, da sich Heißläuferortungsanlagen von der Gleismitte aus gesehen außerhalb der Schienen befinden. Das Temperaturprüfelement ermöglicht hingegen eine Prüfung der Radsatzlager-Temperatur unabhängig vom Drehgestell-Typ - also unabhängig davon, ob das Drehgestell ein außengelagertes Drehgestell oder ein innengelagertes Drehgestell ist.

So kann beispielsweise vorgesehen sein, dass während einer Fahrt des Schienenfahrzeugs mithilfe einer Heißläuferortungsanlage die Temperatur des Temperaturprüfelements ermittelt wird. Die Heißläuferortungsanlage kann die vom Temperaturprüfelement, insbesondere von dessen Messfläche, emittierte Wärmestrahlung erfassen und anhand der erfassten Wärmestrahlung die Temperatur des Temperaturprüfelements ermitteln.

Die bisher gegebene Beschreibung vorteilhafter Ausgestaltungen der Erfindung enthält zahlreiche Merkmale, die in den einzelnen abhängigen Ansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Drehgestell und dem erfindungsgemäßen Verfahren kombinierbar. So sind Verfahrensmerkmale auch als Eigenschaft der entsprechenden Vorrichtungseinheit zu sehen und umgekehrt.

Auch wenn in der Beschreibung bzw. in den Ansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Schienenfahrzeug mit zwei Drehgestellen in einer schematischen Darstellung;
- FIG 2: eins der beiden Drehgestelle aus FIG 1 in einer Draufsicht;
- FIG 3: ein alternatives Drehgestell in einer Draufsicht; und
- FIG 4: noch ein alternatives Drehgestell in einer Draufsicht.

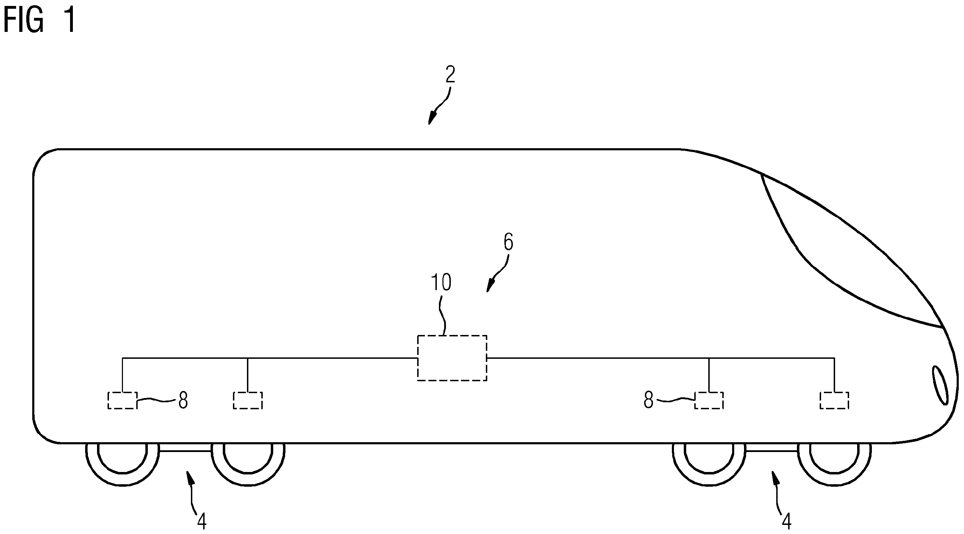

FIG 1 zeigt ein Schienenfahrzeug 2 in einer schematischen Darstellung.

Das Schienenfahrzeug 2 weist zwei Drehgestelle 4 auf, die zumindest im Wesentlichen gleich ausgestaltet sind. Darüber hinaus umfasst das Schienenfahrzeug 2 ein Überwachungssystem 6 mit mehreren Temperatursensoren 8 und eine mit den Temperatursensoren 8 kommunikativ verbundene Auswerteeinheit 10 zur Auswertung von Temperatursignalen, die von den Temperatursensoren 8 erzeugt werden.

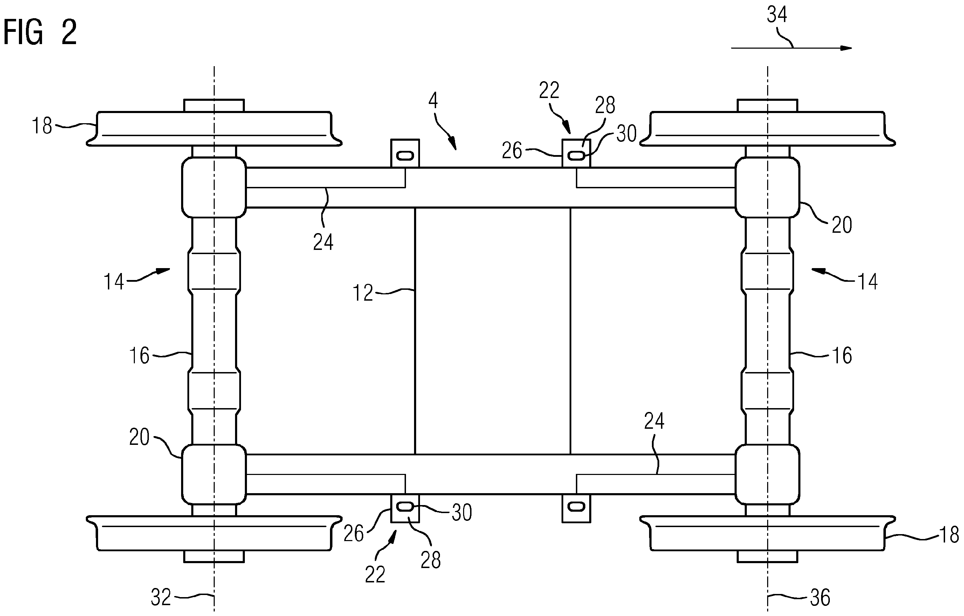

FIG 2 zeigt exemplarisch eins der beiden Drehgestelle 4 des Schienenfahrzeugs 2 aus FIG 1 in einer Draufsicht.

Das Drehgestell 4 weist einen Rahmen 12 sowie zwei identisch ausgestaltete Radsätze 14 auf. Jeder der beiden Radsätze 14 umfasst eine Radsatzwelle 16 sowie zwei mit der Radsatzwelle 16 verbundene Radscheiben 18. Außerdem umfasst jeder der beiden Radsätze 14 zwei Radsatzlager 20, mittels welcher die Radsatzwelle 16 des jeweiligen Radsatzes 14 am Rahmen 12 gelagert ist.

Im vorliegenden Fall handelt es sich bei dem Drehgestell 4 um ein sogenanntes innengelagertes Drehgestell. Das heißt, die Radsatzlager 20 des jeweiligen Radsatzes 14 sind zwischen dessen Radscheiben 18 angeordnet.

Ferner weist das Drehgestell 4 vier Temperaturprüfelemente 22 auf. Weiterhin umfasst das Drehgestell 4 vier wärmeleitende Leitungen 24, die Kupfer als wärmeleitendes Material aufweisen. Jede der wärmeleitenden Leitungen 24 verbindet genau eins der Radsatzlager 20 thermisch mit genau einem der Temperaturprüfelemente 22.

Sowohl die Temperaturprüfelemente 22 als auch die wärmeleitenden Leitungen 24 sind am Rahmen 12 des Drehgestells 4 befestigt. Außerdem sind die wärmeleitende Leitungen 24 gegenüber dem Rahmen 12 thermisch isoliert. Die Temperaturprüfelemente 22 sind an ihrer jeweiligen Befestigungsstelle, an welcher das jeweilige Temperaturprüfelement 22 am Rahmen 12 befestigt ist, gegenüber dem Rahmen 12 thermisch isoliert.

Jedes der Temperaturprüfelemente 22 weist einen wärmeleitenden, plattenförmig ausgebildeten Körper 26 aus Metall, insbesondere aus Kupfer, mit einer wärmeleitenden Messfläche 28 auf. Im vorliegenden Ausführungsbeispiel umfasst jedes der Temperaturprüfelemente 22 zudem eine mit einer Flüssigkeit gefüllte Farbkapsel 30 als optisches Indikationsmittel, welche am metallischen Körper 26 des jeweiligen Temperaturprüfelements 22 angebracht ist.

Weiterhin sind die Temperaturprüfelemente 22 jeweils zwischen einer ersten Ebene 32, welche senkrecht zu einer Längsrichtung 34 des Drehgestells 4 durch einen der beiden Radsätze 14 verläuft, und einer zweiten Ebene 36, welche senkrecht zu der Längsrichtung 34 des Drehgestells 4 durch den anderen der beiden Radsätze 14 verläuft, angeordnet.

Ferner sind die Temperaturprüfelemente 22 im vorliegenden Ausführungsbeispiel an zwei unterschiedlichen, einander gegenüberliegenden Seiten des Drehgestells 4 platziert.

Das Überwachungssystem 6 des Schienenfahrzeugs 2 ermittelt mittels seiner Temperatursensoren 8, welche Temperatur das jeweilige Radsatzlager 20 hat.

Überschreitet die Temperatur eines der Radsatzlager 20 einen vorgegebenen Temperaturschwellwert, erzeugt das Überwachungssystem 6 eine Heißläufer-Meldung, welche einem Fahrzeugführer über ein (figürlich nicht dargestelltes) Ausgabegerät des Schienenfahrzeugs 2 ausgegeben wird und eine dem betroffenen Radsatzlager 20 eindeutig zuordenbare Kennung umfasst. In solch einem Fall wird das Schienenfahrzeug 2 zeitnah zum Stehen gebracht.

Bei Stillstand des Schienenfahrzeugs 2 begibt sich der Fahrzeugführer zu dem betroffenen Radsatzlager 20, um die Heißläufer-Meldung zu plausibilisieren. Zu diesem Zweck ermittelt der Fahrzeugführer mittels eines (figürlich nicht dargestellten) mobilen Thermometers, welche Temperatur dasjenige Temperaturprüfelement 22 aufweist, welches über eine der wärmeleitenden Leitungen 24 mit dem betroffenen Radsatzlager 20 thermisch verbunden ist.

Da über die besagte wärmeleitende Leitung 24 Wärme vom betroffen Radsatzlager 20 an das mit dem Radsatzlager 20 thermisch verbundene Temperaturprüfelement 22 übertragen wird, herrscht ein thermisches Gleichgewicht zwischen dem Radsatzlager 20 und dem Temperaturprüfelement 22, sodass diese beiden Elemente die gleiche Temperatur aufweisen. Durch die Messung der Temperatur des Temperaturprüfelements 22 kann der Fahrzeugführer also von einer gut zugänglichen Stelle aus die Temperatur des Radsatzlagers 20 ermitteln.

Bei dem vom Fahrzeugführer verwendeten Thermometer kann es sich z.B. um ein berührungslos messendes Thermometer, insbesondere ein Pyrometer, handeln, welches die von der Messfläche 28 des besagten Temperaturprüfelements 22 abgestrahlte Wärmestrahlung erfasst und daraus dessen Temperatur ermittelt.

Das Thermometer kann zur Zielflächenerfassung einen Laserstrahl ausstrahlen. Ferner kann das Thermometer eine Lichtquelle zur Beleuchtung des Temperaturprüfelements 22 aufweisen.

Die zuvor erwähnten Farbkapseln 30 sind dazu eingerichtet, zu platzen, wenn die Temperatur des jeweiligen Temperaturprüfelements 22 den vorgegebenen Temperaturschwellwert überschreitet. Das Platzen der Farbkapsel 30 eines der Temperaturprüfelemente 22 führt zu einer Färbung eines Abschnitts des wärmeleitendend Körpers 26 des Temperaturprüfelements 22. Dadurch kann der Fahrzeugführer auch durch eine bloße Sichtkontrolle feststellen, ob die Temperatur des Temperaturprüfelements 22 und damit auch die Temperatur des zugehörigen Radsatzlagers 20 den vorgegebenen Temperaturschwellwert überschritten hat.

Die Beschreibungen der nachfolgenden Ausführungsbeispiele beschränken sich jeweils primär auf die Unterschiede zum vorhergehenden Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind in den nachfolgenden Ausführungsbeispielen übernommen, ohne dass sie erneut beschrieben werden.

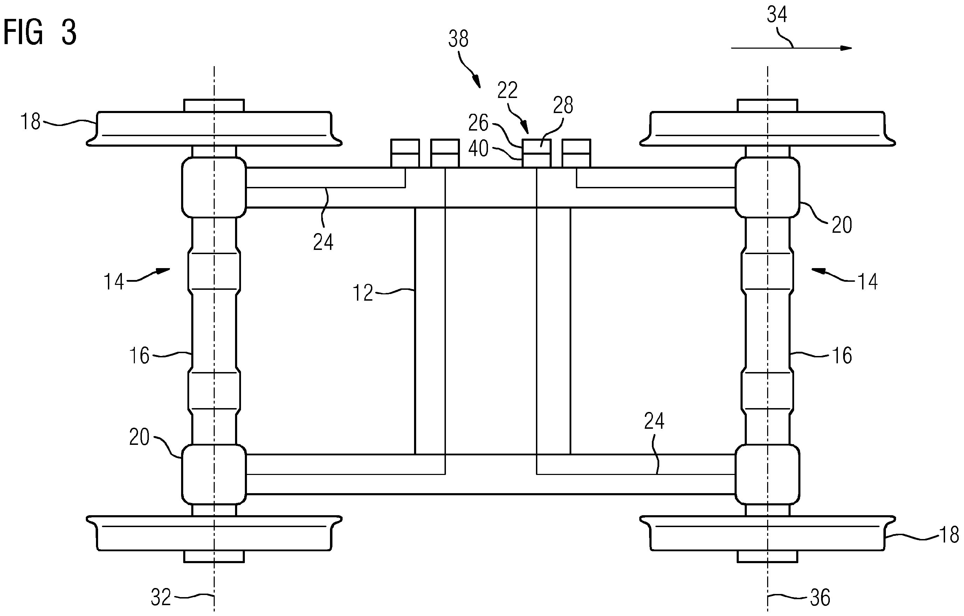

FIG 3 zeigt ein alternatives Drehgestell 38 in einer Draufsicht. Dieses Drehgestell 38 kann beispielsweise anstelle des Drehgestells 4 aus FIG 2 beim Schienenfahrzeug 2 eingesetzt werden.

Im vorliegenden Ausführungsbeispiel sind die Temperaturprüfelemente 22 alle an derselben Seite des Drehgestells 38 angeordnet. Dadurch kann der Fahrzeugführer die Temperaturen aller Radsatzlager 20 von einer Seite des Drehgestells 38 aus prüfen, ohne um das Schienenfahrzeug 2 herum zur anderen Seite des Drehgestells 38 gehen zu müssen.

Außerdem weisen die Temperaturprüfelemente 22 jeweils anstelle einer Farbkapsel einen Thermolack 40 als optisches Indikationsmittel auf.

Überschreitet die Temperatur eines der Temperaturprüfelemente 22 den vorgegebenen Temperaturschwellwert, so verfärbt sich dessen Thermolack 40 irreversibel und signalisiert dadurch optisch die Überschreitung des Temperaturschwellwerts.

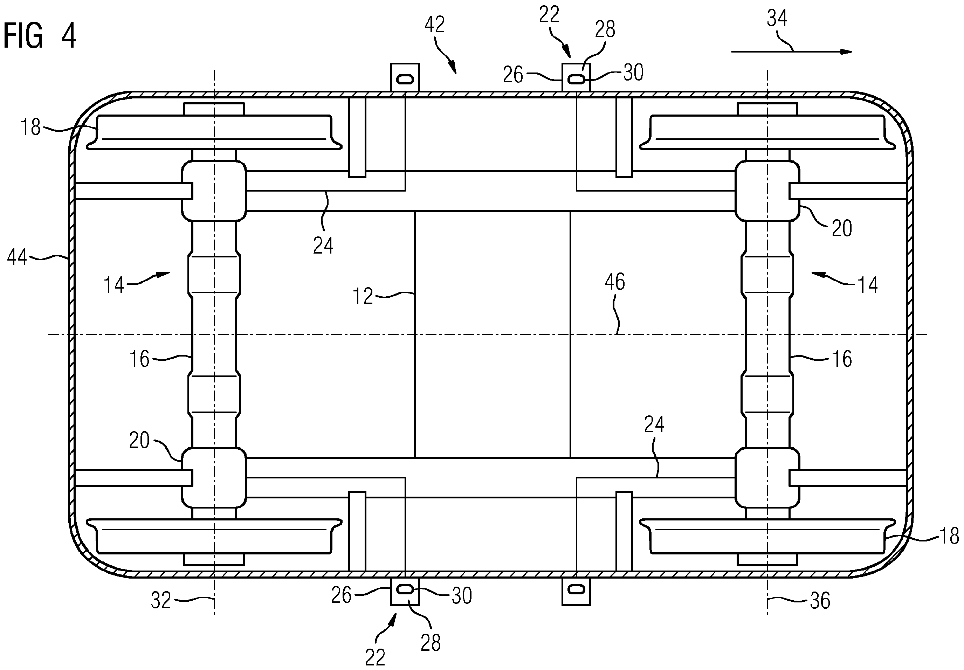

FIG 4 zeigt noch ein alternatives Drehgestell 42 in einer Draufsicht. Dieses Drehgestell 42 kann beispielsweise anstelle des Drehgestells 4 aus FIG 2 oder des Drehgestells 38 aus FIG 3 beim Schienenfahrzeug 2 eingesetzt werden.

Im vorliegenden Ausführungsbeispiel weist das Drehgestell 42 eine Verkleidung 44 auf, die den Rahmen 12 und die Radsätze 14 umgibt, wobei die Verkleidung 44 in einer Schnittdarstellung abgebildet ist.

Die Temperaturprüfelemente 22 dieses Drehgestells 42 sind an einer Außenseite der Verkleidung 44 befestigt. Zudem sind die Temperaturprüfelemente 22 an ihrer jeweiligen Befestigungsstelle, an welcher das jeweilige Temperaturprüfelement 22 an der Verkleidung 44 befestigt ist, gegenüber der Verkleidung 44 thermisch isoliert.

Ferner weisen die Temperaturprüfelemente 22 jeweils einen größeren Abstand zu einer Längs-Mittelebene 46 des Drehgestells 42 auf als die Radscheiben 18 der Radsätze 14.

Während einer Fahrt des Schienenfahrzeugs 2 können streckenseitige (figürlich nicht dargestellte) Heißläuferortungsanlagen, die sich von der Gleismitte aus gesehen außerhalb der Schienen befinden, genutzt werden, um die Temperaturen der Temperaturprüfelemente 22 zu ermitteln und dadurch die Temperaturen der Radsatzlager 20 zu prüfen.

Der Einsatz von streckenseitigen Heißläuferortungsanlagen zur Überwachung der Radsatzlagertemperaturen ist nicht auf ein Drehgestell mit einer Verkleidung - z.B. wie in FIG 4 dargestellt - beschränkt. Auch bei dem Drehgestell 4 aus FIG 2 oder dem Drehgestell 38 aus FIG 3 ist eine solche Überwachung mithilfe streckenseitiger Heißläuferortungsanlagen möglich, wenn die Temperaturprüfelemente 22 hinreichend lang ausgestaltet sind und/oder einen hinreichend großen Abstand zur Längs-Mittelebene 46 des jeweiligen Drehgestells 4, 38 aufweisen, sodass die von den Temperaturprüfelementen 22 abgestrahlte Wärmestrahlung von den Heißläuferortungsanlagen erfasst werden kann.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können hieraus abgeleitet werden, ohne den durch die Ansprüche definierten Schutzumfang der Erfindung zu verlassen.

## Patentansprüche

1. Drehgestell (4, 38, 42) für ein Schienenfahrzeug (2), aufweisend einen Radsatz (14) mit einem Radsatzlager (20),
**gekennzeichnet durch** ein Temperaturprüfelement (22) und eine wärmeleitende Leitung (24), durch welche das Radsatzlager (20) mit dem Temperaturprüfelement (22) thermisch verbunden ist.

2. Drehgestell (4, 38, 42) nach Anspruch 1,
**dadurch gekennzeichnet, dass** die wärmeleitende Leitung (24) zumindest abschnittweise thermisch isoliert ist.

3. Drehgestell (4, 38, 42) nach Anspruch 1 oder 2,
**dadurch gekennzeichnet, dass** der Radsatz (14) zwei Radscheiben (18) umfasst und das Radsatzlager (20) zwischen den beiden Radscheiben (18) angeordnet ist.

4. Drehgestell (4, 38, 42) nach einem der vorhergehenden Ansprüche,
**dadurch gekennzeichnet, dass** das Temperaturprüfelement (22) als wärmeleitender Körper (26) mit einer wärmeleitenden Messfläche (28) ausgebildet ist oder dass das Temperaturprüfelement (22) einen wärmeleitenden Körper (26) mit einer wärmeleitenden Messfläche (28) umfasst.

5. Drehgestell (4, 38, 42) nach einem der vorhergehenden Ansprüche,
**dadurch gekennzeichnet, dass** das Temperaturprüfelement (22) ein Indikationsmittel (30, 40) umfasst, welches dazu eingerichtet ist, zu signalisieren, ob eine Temperatur des Temperaturprüfelements (22) einen vorgegebenen Temperaturschwellwert überschritten hat.

6. Drehgestell (4, 38, 42) nach Anspruch 5,
**dadurch gekennzeichnet, dass**
- als Indikationsmittel ein Thermolack (40) vorgesehen ist, der dazu eingerichtet ist, sich zu verfärben, wenn die Temperatur des Temperaturprüfelements (22) den vorgegebenen Temperaturschwellwert überschreitet, oder
- als Indikationsmittel mindestens eine Farbkapsel (30) vorgesehen ist, die dazu eingerichtet ist, aufzuplatzen, wenn die Temperatur des Temperaturprüfelements (22) den vorgegebenen Temperaturschwellwert überschreitet.

7. Drehgestell (4, 38, 42) nach einem der vorhergehenden Ansprüche,
**gekennzeichnet durch** einen weiteren Radsatz (14), wobei das Temperaturprüfelement (22) zwischen einer ersten Ebene (32), die senkrecht zu einer Längsrichtung (34) des Drehgestells (4, 38, 42) durch den erstgenannten Radsatz (14) verläuft, und einer zweiten Ebene (36), die senkrecht zu der Längsrichtung (34) des Drehgestells (4, 38, 42) durch den weiteren Radsatz (14) verläuft, angeordnet ist.

8. Drehgestell (4, 38, 42) nach einem der vorhergehenden Ansprüche,
**gekennzeichnet durch** ein weiteres Temperaturprüfelement (22) und eine weitere wärmeleitende Leitung (24), durch welche ein weiteres Radsatzlager (20) des Radsatzes (14) mit dem weiteren Temperaturprüfelement (22) thermisch verbunden ist, wobei das erstgenannte Temperaturprüfelement (22) und das weitere Temperaturprüfelement (22) an einander gegenüberliegenden Seiten des Drehgestells (4, 38, 42) positioniert sind.

9. Drehgestell (4, 38, 42) nach einem der vorhergehenden Ansprüche,
**gekennzeichnet durch** ein zusätzliches Temperaturprüfelement (22) und eine zusätzliche wärmeleitende Leitung (24), durch welche ein zusätzliches Radsatzlager (20) des Radsatzes (14) mit dem zusätzlichen Temperaturprüfelement (22) thermisch verbunden ist, wobei das erstgenannte Temperaturprüfelement (22) und das zusätzliche Temperaturprüfelement (22) an derselben Seite des Drehgestells (4, 38, 42) positioniert sind.

10. Drehgestell (4, 38, 42) nach einem der vorhergehenden Ansprüche,
**gekennzeichnet durch** einen Drehgestellrahmen (12) und eine Verkleidung (44), welche den Drehgestellrahmen (12) und den Radsatz (14) zumindest teilweise umgibt, wobei das Temperaturprüfelement (22) an einer Außenseite der Verkleidung (44) angeordnet ist.

11. Drehgestell (4, 38, 42) nach einem der vorhergehenden Ansprüche,
**dadurch gekennzeichnet, dass** das Temperaturprüfelement (22) einen Abschnitt aufweist, der einen größeren Abstand zu einer Längs-Mittelebene (46) des Drehgestells (4, 38, 42) aufweist als eine Radscheibe (18) des Radsatzes (14).

12. Schienenfahrzeug (2) mit mindestens einem Drehgestell (4, 38, 42) nach einem der vorhergehenden Ansprüche.

13. Verfahren zum Prüfen einer Radsatzlager-Temperatur eines Schienenfahrzeugs (2), bei dem das Schienenfahrzeug (2) ein Drehgestell (4, 38, 42) mit einem Radsatz (14), einer wärmeleitenden Leitung (24) und einem Temperaturprüfelement (22) aufweist, ein Radsatzlager (20) des Radsatzes (14) durch die wärmeleitende Leitung (24) mit dem Temperaturprüfelement (22) thermisch verbunden ist, über die wärmeleitende Leitung (24) Wärme von dem Radsatzlager (20) an das Temperaturprüfelement (22) geleitet wird und eine Temperatur des Temperaturprüfelements (22) geprüft wird.

14. Verfahren nach Anspruch 13,
**dadurch gekennzeichnet, dass** während eines Stillstands des Schienenfahrzeugs (2) die Temperatur des Temperaturprüfelements (22) mithilfe eines Thermometers ermittelt wird.

15. Verfahren nach Anspruch 13 oder 14,
**dadurch gekennzeichnet, dass** während einer Fahrt des Schienenfahrzeugs (2) mithilfe einer Heißläuferortungsanlage die Temperatur des Temperaturprüfelements (22) ermittelt wird.

## Claims

1. Bogie (4, 38, 42) for a rail vehicle (2) having a wheel set (14) having a wheel set bearing (20),
**characterized by** a temperature verification element (22) and a thermally conductive line (24), by means of which the wheel set bearing (20) is thermally connected to the temperature verification element (22).

2. Bogie (4, 38, 42) according to Claim 1,
**characterized in that** the thermally conductive line (24) is at least partially thermally insulated.

3. Bogie (4, 38, 42) according to Claim 1 or 2,
**characterized in that** the wheel set (14) comprises two wheel disks (18) and the wheel set bearing (20) is arranged between the two wheel disks (18).

4. Bogie (4, 38, 42) according to one of the preceding claims,
**characterized in that** the temperature verification element (22) is constructed as a thermally conductive member (26) with a thermally conductive measurement face (28) or **in that** the temperature verification element (22) comprises a thermally conductive member (26) with a thermally conductive measurement face (28).

5. Bogie (4, 38, 42) according to one of the preceding claims,
**characterized in that** the temperature verification element (22) comprises an indication means (30, 40), which is configured to signal whether a temperature of the temperature verification element (22) has exceeded a predetermined temperature threshold value.

6. Bogie (4, 38, 42) according to Claim 5,
**characterized in that**
- there is provided as an indication means a thermal paint (40) which is configured to discolor when the temperature of the temperature verification element (22) exceeds the predetermined temperature threshold value, or
- there is provided as an indication means at least one paint capsule (30) which is configured to burst when the temperature of the temperature verification element (22) exceeds the predetermined temperature threshold value.

7. Bogie (4, 38, 42) according to one of the preceding claims,
**characterized by** an additional wheel set (14), wherein the temperature verification element (22) is arranged between a first plane (32) which extends perpendicularly to a longitudinal direction (34) of the bogie (4, 38, 42) through the first wheel set (14) mentioned, and a second plane (36) which extends perpendicularly to the longitudinal direction (34) of the bogie (4, 38, 42) through the additional wheel set (14) .

8. Bogie (4, 38, 42) according to one of the preceding claims,
**characterized by** an additional temperature verification element (22) and an additional thermally conductive line (24), by means of which an additional wheel set bearing (20) of the wheel set (14) is thermally connected to the additional temperature verification element (22), wherein the first temperature verification element (22) mentioned and the additional temperature verification element (22) are positioned at mutually opposite sides of the bogie (4, 38, 42) .

9. Bogie (4, 38, 42) according to one of the preceding claims,
**characterized by** an additional temperature verification element (22) and an additional thermally conductive line (24), by means of which an additional wheel set bearing (20) of the wheel set (14) is thermally connected to the additional temperature verification element (22), wherein the first temperature verification element (22) mentioned and the additional temperature verification element (22) are positioned at the same side of the bogie (4, 38, 42).

10. Bogie (4, 38, 42) according to one of the preceding claims,
**characterized by** a bogie frame (12) and a cladding (44) which at least partially surrounds the bogie frame (12) and the wheel set (14), wherein the temperature verification element (22) is arranged at an outer side of the cladding (44).

11. Bogie (4, 38, 42) according to one of the preceding claims,
**characterized in that** the temperature verification element (22) has a portion which has a greater spacing with respect to a longitudinal center plane (46) of the bogie (4, 38, 42) than a wheel disk (18) of the wheel set (14).

12. Rail vehicle (2) having at least one bogie (4, 38, 42) according to one of the preceding claims.

13. Method for verifying a wheel set bearing temperature of a rail vehicle (2), wherein the rail vehicle (2) has a bogie (4, 38, 42) having a wheel set (14), a thermally conductive line (24) and a temperature verification element (22), a wheel set bearing (20) of the wheel set (14) is thermally connected by the thermally conductive line (24) to the temperature verification element (22), heat from the wheel set bearing (20) is directed to the temperature verification element (22) via the thermally conductive line (24) and a temperature of the temperature verification element (22) is verified.

14. Method according to Claim 13,
**characterized in that** during a stoppage of the rail vehicle (2) the temperature of the temperature verification element (22) is established by means of a thermometer.

15. Method according to Claim 13 or 14,
**characterized in that** during travel of the rail vehicle (2) the temperature of the temperature verification element (22) is established by means of a hot box location system.

## Revendications

1. Boggie (4, 38, 42) d'un véhicule (2) ferroviaire, comportant un essieu (14) ayant un palier (20),
**caractérisé par** un élément (22) de contrôle de la température et par une ligne (24) conduisant la chaleur, par laquelle le palier (20) de l'essieu est relié thermiquement à l'élément (22) de contrôle de la température.

2. Boggie (4, 38, 42) suivant la revendication 1,
**caractérisé en ce que** la ligne (24) conduisant la chaleur est isolée thermiquement, au moins par tronçon.

3. Boggie (4, 38, 42) suivant la revendication 1 ou 2,
**caractérisé en ce que** l'essieu (14) comprend deux disques (18) de roue et le palier (20) de l'essieu est monté entre les deux disques (18) de roue.

4. Boggie (4, 38, 42) suivant l'une des revendications précédentes,
**caractérisé en ce que** l'élément (22) de contrôle de la température est constitué sous la forme d'une pièce (26) conduisant la chaleur, ayant une surface (28) de mesure conduisant la chaleur ou **en ce que** l'élément (22) de contrôle de la température comprend une pièce (26) conduisant la chaleur, ayant une surface (28) de mesure conduisant la chaleur.

5. Boggie (4, 38, 42) suivant l'une des revendications précédentes,
**caractérisé en ce que** l'élément (22) de contrôle de la température comprend un moyen (30, 40) d'indication, conçu pour signaler si une température de l'élément (22) de contrôle de la température a dépassé une valeur de seuil de température donnée à l'avance.

6. Boggie (4, 38, 42) suivant la revendication 5, **caractérisé en ce que**
- il est prévu, comme moyen d'indication, un vernis (40) thermosensible, conçu pour se colorer, si la température de l'élément (22) de contrôle de la température dépasse la valeur de seuil de température donnée à l'avance, ou
- il est prévu, comme moyen d'indication, au moins une capsule (30) colorée, conçue pour éclater, si la température de l'élément (22) de contrôle de la température dépasse la valeur de seuil de température donnée à l'avance.

7. Boggie (4, 38, 42) suivant l'une des revendications précédentes,
**caractérisé par** un autre essieu (14), l'élément (22) de contrôle de la température étant disposé entre un premier plan (32), qui s'étend perpendiculairement à une direction (34) longitudinale du boggie (4, 38, 42) dans l'essieu (14) mentionné en premier, et un deuxième plan (36), qui s'étend perpendiculairement à la direction (34) longitudinale du boggie (4, 38, 42) dans le deuxième essieu (14).

8. Boggie (4, 38, 42) suivant l'une des revendications précédentes,
**caractérisé par** un autre élément (22) de contrôle de la température et par une autre ligne (24) conduisant la chaleur, par laquelle un autre palier (20) de l'essieu (14) est relié thermiquement à l'autre élément (22) de contrôle de la température, l'élément (22) de contrôle de la température mentionné en premier et l'autre élément (22) de contrôle de la température étant mis en position sur des côtés opposés l'un à l'autre du boggie (4, 38, 42).

9. Boggie (4, 38, 42) suivant l'une des revendications précédente,
**caractérisé par** un élément (22) supplémentaire de contrôle de la température et par une ligne (24) supplémentaire conduisant la chaleur, par laquelle un palier (20) supplémentaire de l'essieu (14) est relié thermiquement à l'élément (22) supplémentaire de contrôle de la température, l'élément (22) de contrôle de la température mentionné en premier et l'élément (22) supplémentaire de contrôle de la température étant mis en position du même côté du boggie (4, 38, 42).

10. Boggie (4, 38, 42) suivant l'une des revendications précédentes,
**caractérisé par** un châssis (12) de boggie et un habillage (44), qui entoure, au moins en partie, le châssis (12) de boggie et l'essieu (14), l'élément (22) de contrôle de la température étant disposé sur un côté extérieur de l'habillage (44).

11. Boggie (4, 38, 42) suivant l'une des revendications précédentes,
**caractérisé en ce que** l'élément (22) de contrôle de la température a une partie, qui est à une distance plus grande d'un plan (46) médian longitudinal du boggie (4, 38, 42) qu'un disque (18) de roue de l'essieu (14).

12. Véhicule (2) ferroviaire ayant au moins un boggie (4, 38, 42) suivant l'une des revendications précédentes.

13. Procédé de contrôle d'une température de palier d'essieu d'un véhicule (2) ferroviaire, dans lequel le véhicule (2) ferroviaire a un boggie (4, 38, 42) ayant un essieu (14), une ligne (24) conduisant la chaleur et un élément (22) de contrôle de la température, un palier (20) de l'essieu (14) étant relié thermiquement à l'élément (22) de contrôle de la température par la ligne (24) conduisant la chaleur, de la chaleur allant, par la ligne (24) conduisant la chaleur, du palier (20) de l'essieu à l'élément (22) de contrôle de la température et une température de l'élément (22) de contrôle de la température étant contrôlée.

14. Procédé suivant la revendication 13,
**caractérisé en ce que**, pendant un arrêt du véhicule (2) ferroviaire, on détermine la température de l'élément (22) de contrôle de la température à l'aide d'un thermomètre.

15. Procédé suivant la revendication 13 ou 14,
**caractérisé en ce que**, pendant une marche du véhicule (2) ferroviaire, on détermine la température de l'élément (22) de contrôle de la température à l'aide d'un système de localisation d'un patin chaud.
